# EUROPÄISCHE PATENTSCHRIFT

(11) **EP 3 119 717 B1**
(45) Veröffentlichungstag und Bekanntmachung des Hinweises auf die Patenterteilung: **15.11.2017**
(21) Anmeldenummer: 15703786.2
(22) Anmeldetag: 12.02.2015
(51) Int. Cl.: B67C 7/00, B08B 9/20, B29C 49/42, B65B 35/24, B65G 47/86

(54) **BEHÄLTERBEHANDLUNGSMASCHINE SOWIE VERFAHREN ZUM ZU- UND ABFÜHREN VON BEHÄLTERN ZU EINER BEHÄLTERBEHANDLUNGSMASCHINE**
CONTAINER TREATMENT MACHINE, AND METHOD FOR SUPPLYING AND DISCHARGING CONTAINERS TO AND FROM THE CONTAINER TREATMENT MACHINE
MACHINE DE TRAITEMENT DE RÉCIPIENTS ET PROCÉDÉ D'AMENER ET D'ENLÈVEMENT DE RÉCIPIENTS À UNE MACHINE DE TRAITEMENT DE RÉCIPIENTS RESPECTIVEMENT DE CELLE-CI

(30) Priorität: 18.03.2014 DE 102014103671
(43) Veröffentlichungstag der Anmeldung: 25.01.2017
(73) Patentinhaber: KHS GmbH, 44143 Dortmund (DE)
(72) Erfinder: CLÜSSERATH, Ludwig, 55543 Bad Kreuznach (DE)
(86) Internationale Anmeldenummer: PCT/EP2015/052918
(87) Internationale Veröffentlichungsnummer: WO 2015/139888

(56) Entgegenhaltungen:
- WO-A1-02/49829
- WO-A1-2010/099957
- WO-A2-2010/013201
- DE-A1- 3 300 814

## Beschreibung

Die Erfindung bezieht sich auf eine Behälterbehandlungsmaschine gemäß dem Oberbegriff des Anspruchs 1 sowie ein entsprechendes Verfahren zum Zu- und/oder Abführen von Behältern zu/von einer Behälterbehandlungsmaschine. Behälterbehandlungsmaschinen, insbesondere solche umlaufender Bauart, bei denen ein um eine vertikale Maschinenachse rotierend angetriebenes Transportelement vorgesehen ist, sind hinlänglich bekannt. Derartigen Behälterbehandlungsmaschinen werden über einen ersten Transferstern teilungsgerecht zu behandelnde Behälter zugeführt und über einen zweiten Transferstern bereits behandelte Behälter abgeführt.

Nachteilig dabei ist, dass durch das Vorsehen jeweils eines getrennten Transfersterns für die Zuführung und Abführung der Behälter ein Verlustwinkel entsteht, in dem keine Behälterbehandlung erfolgen kann. Dadurch wird die Leistung der Behälterbehandlungsmaschine (behandelte Behälter pro Zeiteinheit) beeinträchtigt.

Ein Versuch zur Lösung dieses Problems wurde durch die WO 2010/099957 A1 vorgestellt. Diese Schrift befasst sich mit einer Transfervorrichtung die dazu dient, Werkstücke von einem Transportkarussell auf ein Behandlungskarussell mit mehreren in Umfangsrichtung nebeneinander angeordnete Werkstückträger zu übergeben. Dazu sieht die WO 2010/099957 A1 vor, dass die Transfervorrichtung zwischen dem Transportkarussell und dem Behandlungskarussell angeordnet ist. Mehr im Detail weist die Transfervorrichtung u.a. eine Greifer förmige Handhabungseinrichtung auf, welche dazu dient, die Werkstücke vom Transportkarussell zu entnehmen, anschließend an das Behandlungskarussell zu übergeben und nach der Behandlung wieder an das Transportkarussell zu übergeben. Weiterhin ist dabei vorgesehen, dass die Handhabungseinrichtung während der Entnahme, dem Transfer und dem Abladen der Werkstücke mit einer zumindest näherungsweise konstanten Geschwindigkeit angetrieben ist. Eine Leistungssteigerung soll entsprechend der Lehre der WO 2010/099957A1 dadurch erzielt werden, dass die Handhabungsvorrichtung je Bewegungsrichtung jeweils zwei Werkstücke gleichzeitig handhabt. Nachteilig an dieser Vorrichtung ist, dass sie mechanisch aufwändig und teuer ist, und dass die Steuerung der erforderlichen Bewegungsabläufe kompliziert ist.

Ebenfalls bekannt wurde eine Vorrichtung nach der WO 2010/013201 A2.

Die durch diese Schrift vorgestellte Vorrichtung betrifft eine Blasformanlage zur Herstellung von Kunststoffbehältern aus entsprechenden Vorformlingen. Dabei umfasst die Blasformanlage einen Behandlungsrotor, der mit einer Vielzahl von Blasformen ausgestattet ist, wobei jede dieser Blasformen mindestens zwei Kavitäten zum Blasformen jeweils eines Behälters aufweist. Die Vorformlinge sind zunächst an einem Kettenförderer gehalten und werden durch diesen Kettenförderer auch durch die, zur Erwärmung der Vorformlinge erforderliche Heizstrecke geführt. Nach ihrer Erwärmung werden die Vorformlinge durch ein mit Greifer förmigen Elementen ausgestattetes Übertragungsrad jeweils paarweise von dem Kettenförderer entnommen und ebenfalls paarweise in eine gemeinsame Blasform übergeben. Nachteilig an dieser Vorrichtung ist, dass das mit Greifer förmigen Elementen ausgestattete Übertragungsrad in seiner Herstellung aufwändig und teuer ist. Ebenfalls erfordern die komplizierten Bewegungsabläufe hohen konstruktiven Aufwand. Eine Behälterbehandlungsmaschine mit den Merkmalen des Oberbegriffs des Anspruchs 1 und ein entsprechendes Verfahren werden in WO 02/49829 A1 offenbart. Ausgehend hiervon ist es Aufgabe der Erfindung, eine Behälterbehandlungsmaschine anzugeben, die eine in Bezug auf den Behälterdurchsatz verbesserte Leistungsfähigkeit aufweist.

Die Aufgabe wird ausgehend vom Oberbegriff des unabhängigen Patentanspruchs 1 durch dessen kennzeichnende Merkmale gelöst. Ein Verfahren zum Zu- und/oder Abführen von Behältern zu/von einer Behälterbehandlungsmaschine ist Gegenstand des unabhängigen Patentanspruchs 16. Gemäß einem ersten Aspekt bezieht sich die Erfindung auf eine Behälterbehandlungsmaschine. Die Behälterbehandlungsmaschine umfasst ein um eine vertikale Maschinenachse umlaufendes Transportelement mit einer Vielzahl von Behandlungsstationen zum Behandeln von Behältern, einen ersten Transferstern zum Zuführen der zu behandelnden Behälter zum Transportelement und einen zweiten Transferstern zum Abführen der bereits behandelten Behälter vom Transportelement. Der erste Transferstern ist dabei derart ausgebildet und in Bezug auf das Transportelement derart angeordnet, dass gleichzeitig jeweils zwei zu behandelnde Behälter zwei in Umfangsrichtung des Transportelements aufeinanderfolgenden Behandlungsstationen zugeführt werden. Ferner ist der zweite Transferstern derart ausgebildet und in Bezug auf das Transportelement derart angeordnet, dass gleichzeitig jeweils zwei bereits behandelte Behälter von zwei in Umfangsrichtung des Transportelements aufeinanderfolgenden Behandlungsstationen abgeführt werden. Vorzugsweise ist die Anordnung des ersten und/oder zweiten Transfersterns derart gewählt, dass sich die Transportbahnen, auf denen die Behälterhochachsen der Behälter durch die Transfersterne bewegt werden mit der Transportbahn, auf der die Behälterhochachsen der Behälter durch das Transportelement bewegt werden, überlappen. Durch die gleichzeitige Zuführung von jeweils zwei Behältern zum Transportelement bzw. die gleichzeitige Abführung zweier Behälter vom Transportelement kann die Behälterbehandlungsmaschine mit einer höheren Leistung betrieben und der Verlustwinkel zwischen dem ersten und zweiten Transferstern minimiert werden. Eine weitere Reduktion des Verlustwinkels der Behälterbehandlungsmaschine lässt sich durch eine Überlappung des ersten und zweiten Transfersterns erreichen.

In einem Ausführungsbeispiel ist der erste Transferstern zur Zuführung zweier zu behandelnder Behälter derart ausgebildet, dass durch einen einzigen Zuführschritt zwei zu behandelnde Behälter gleichzeitig unter zwei aufeinanderfolgenden Behandlungsstationen positioniert werden. Bevorzugt weist der erste Transferstern mehrere umfangsseitig angeordnete Behälteraufnahmen, auch als Transfersternbehälteraufnahmen bezeichnet, auf, wobei durch einen einzigen Zuführschritt, d.h. eine Drehung des ersten Transfersterns um einen Winkelbetrag, beispielsweise einen Winkelbetrag zwischen 90° und 180° zwei in den Behälteraufnahmen angeordnete Behälter gleichzeitig an Übergabepositionen bewegt werden, wobei sich jeweils eine Übergabeposition unter einer Behandlungsstation des Transportelements befindet. Vorzugsweise ist die Teilung des ersten Transfersterns an die Maschinenteilung des Transportelements derart angepasst, dass der Abstand zweier aufeinanderfolgender Behandlungsstationen gleich dem Abstand zweier aufeinanderfolgender Behälteraufnahmen des ersten Transfersterns ist. Erfindungsgemäß ist dem ersten Transferstern eine erste Hubeinrichtung zugeordnet, mittels der eine gleichzeitige Übergabe beider zu behandelnder Behälter an die Behandlungsstationen des Transportelements durch Anheben der zu behandelnden Behälter von Übergabepositionen in Behandlungspositionen erfolgt. Die erste Hubeinrichtung kann beispielsweise Haltemittel aufweisen, die den anzuhebenden Behälter zumindest teilweise, beispielsweise in seinem Halsbereich umgreifen. Alternativ kann die erste Hubeinrichtung unterhalb des Behälters vorgesehen sein, wobei der Behälter bodenseitig auf der Hubeinrichtung aufsteht. Insbesondere kann die erste Hubeinrichtung eine hydraulisch oder pneumatisch betätigte Hubeinrichtung sein. Weiterhin kann die erste Hubeinrichtung ortsfest vorgesehen sein.

In einem weiteren Ausführungsbeispiel ist der zweite Transferstern zur Abführung zweier bereits behandelter Behälter derart ausgebildet ist, dass jeweils eine Transfersternbehälteraufnahme eines Paars von Transfersternbehälteraufnahmen in vertikaler Richtung unter jeweils einer Behandlungsstation eines Paars von aufeinanderfolgenden Behandlungsstationen positioniert wird. Vorzugsweise ist die Teilung des zweiten Transfersterns an die Maschinenteilung des Transportelements derart angepasst, dass der Abstand zweier aufeinanderfolgender Behandlungsstationen gleich dem Abstand zweier aufeinanderfolgender Behälteraufnahmen des zweiten Transfersterns ist. Damit können zwei bereits behandelte Behälter gleichzeitig von den Behandlungsstationen abgenommen und in die darunterliegenden Behälteraufnahmen eingebracht werden.

In einem weiteren Ausführungsbeispiel ist dem zweiten Transferstern eine zweite Hubeinrichtung zugeordnet, mittels der eine gleichzeitige Übergabe beider bereits behandelter Behälter von den Behandlungsstationen des Transportelements an Transfersternbehälteraufnahmen des zweiten Transfersterns durch Absenken der bereits behandelten Behälter von den Behandlungspositionen in Übergabepositionen erfolgt. Vorzugsweise ist die zweite Hubeinrichtung analog zur ersten Hubeinrichtung ausgebildet. Sie kann ferner zusammen mit der ersten Hubeinrichtung an einer gemeinsamen Tragkonstruktion oder einem gemeinsamen Gestell gehalten sein. Die zweite Hubeinrichtung kann beispielsweise Haltemittel aufweisen, die den abzusenkenden Behälter zumindest teilweise, beispielsweise in seinem Halsbereich umgreifen. Alternativ kann die zweite Hubeinrichtung unterhalb des Behälters vorgesehen sein, wobei der Behälter bodenseitig auf der Hubeinrichtung aufsteht. Insbesondere kann die zweite Hubeinrichtung eine hydraulisch oder pneumatisch betätigte Hubeinrichtung sein. Weiterhin kann die zweite Hubeinrichtung ortsfest vorgesehen sein.

In einem bevorzugten Ausführungsbeispiel erfolgt die Zuführung bzw. Abführung der Behälter durch den ersten und zweiten Transferstern in einer ersten Höhenebene und die Behandlung der Behälter an den Behandlungsstationen in einer zweiten, oberhalb der ersten Höhenebene liegenden Höhenebene. Dadurch wird es möglich, dass die zuzuführenden bzw. abzuführenden Behälterpaare zunächst durch den ersten bzw. zweiten Transferstern unterhalb eines Paares von Behandlungsstationen auf Übergabepositionen angeordnet und anschließend durch Anheben an die Behandlungsstationen übergeben werden. Durch den Höhenversatz zwischen der Ebene der Zuführung bzw. Abführung der Behälter und der Behandlungsebene, in der die Behälterbehandlung erfolgt, wird eine nahezu voneinander unabhängige Drehung der Transfersterne und des Transportelements möglich. Vorzugsweise erfolgt das Anheben der zu behandelnden Behälter von der ersten Höhenebene in die zweite Höhenebene durch die erste Hubeinrichtung und das Absenken der behandelten Behälter von der zweiten Höhenebene in die erste Höhenebene durch die zweite Hubeinrichtung.

In einem bevorzugten Ausführungsbeispiel weisen die Behandlungsstationen Mittel zur Halterung der Behälter in der angehobenen Position auf. Die Haltemittel können dabei insbesondere durch Verriegelungsvorrichtungen gebildet werden, die eine Halterung des Behälters in seinem Hals- oder Mündungsbereich bewirken. Die Haltemittel können rastenartig ausgebildet sein und zum Hintergreifen von Vorsprüngen bzw. Wulsten ausgebildet sein. Die Haltemittel können vorzugsweise hydraulisch oder pneumatisch betätigbar sein. Durch die Haltemittel werden die Behälter vorzugsweise in einer an der jeweiligen Behandlungsstation angepressten Stellung auf dem Transportweg zwischen dem ersten und zweiten Transferstern gehalten.

Weiterhin vorzugsweise sind das Transportelement und der erste und zweite Transferstern unabhängig voneinander antreibbar ausgebildet. Der Antrieb kann beispielsweise jeweils durch einen Servomotor gebildet werden. Dadurch lässt sich ein optimierter Gesamtbetrieb der Behälterbehandlungsmaschine erreichen.

In einem Ausführungsbeispiel sind das Transportelement und der erste und zweite Transferstern zumindest teilweise wechselseitig getaktet oder intermittierend antreibbar ausgebildet. Durch den getakteten Antrieb werden gleichzeitige Stillstandphasen des Transportelements und des ersten und/oder zweiten Transfersterns erreicht, die beispielsweise zur Übergabe eines Behälterpaares vom ersten Transferstern an Behandlungsstationen des Transportelements oder zur Übergabe eines Behälterpaares von Behandlungsstationen des Transportelements an den zweiten Transferstern genutzt werden.

In einem Ausführungsbeispiel sind die Hubeinrichtung oder daran vorgesehene Haltemittel in radialer Richtung gegenüber der Behälterhochachse des Behälters verfahrbar ausgebildet. Dadurch lässt sich nach dem Zuführen eines Behälterpaares auf die Übergabepositionen die Hubeinrichtung bzw. die Haltemittel aus einer zurückgezogenen Position, an der die Haltemittel von den Behältern beanstandet sind, in eine vorgeschobene Position bringen, in der die Haltemittel zumindest teilweise die Behälter umfangsseitig umgreifen. Damit ist es möglich, einen kollisionsfreien Ein- bzw. Auslauf der Behälter an die Übergabepositionen zu bewirken.

In einem weiteren Ausführungsbeispiel erfolgt die Zuführung und Abführung der Behälter zu dem ersten und zweiten Transferstern mittels eines einzigen, unterhalb der Transfersterne verlaufenden Transporteurs. Der Transporteur kann beispielsweise durch ein umlaufendes Transportband, eine umlaufende Transportkette, eine Transportschnecke oder ähnliche Transporteinrichtungen gebildet werden. Vorzugsweise ist der Transporteur, der die Zuführung bzw. Abführung der Behälter bewirkt, geradlinig ausgebildet, d.h. die Zuführung und die Abführung der Behälter erfolgt in der gleichen Raumrichtung. Damit kann die Zuführung bzw. Abführung mit geringem technischem Aufwand realisiert werden.

Bevorzugt ist die Behälterbehandlungsmaschine als Füllmaschine, als Reinigungs- und/oder Desinfektionsmaschine oder als Inspektionsmaschine ausgebildet. Die am Transportelement vorgesehenen Behandlungsstationen können beispielsweise Füllstationen, Reinigungs- und Desinfektionsstationen oder Inspektionsstationen sein.

Die Erfindung betrifft des Weiteren ein Verfahren zum Zuführen und/oder Abführen von Behältern zu einer Behälterbehandlungsmaschine. Erfindungsgemäß erfolgt die Übergabe der beiden zu behandelnden Behälter an die Behandlungsstationen des Transportelements gleichzeitig durch eine, dem ersten Transferstern zugeordnete erste Hubeinrichtung, mittels Anheben der zu behandelnden Behälter von der Übergabe Position in Behandlungspositionen. Behälter im Sinne der Erfindung sind beispielsweise Flaschen, Dosen oder ähnliche Behältnisse aus jeglichem dafür geeigneten Material, insbesondere aus Glas, Kunststoff oder Metall. Behälter im Sinne der Erfindung können insbesondere sogenannte PET-Keg's sein, also beispielsweise großvolumige Behältnisse aus einem Kunststoffmaterial mit einem Volumen von 10l, 20l oder 30l. Behälterbehandlungsmaschine im Sinne der Erfindung sind jegliche Maschinen, mit denen eine Behälterbehandlung vollzogen werden kann, beispielsweise Füllmaschinen, Reinigungsmaschinen, Inspektionsmaschinen oder Maschinen zur Ausstattung der Behälter mit Ausstattungsmerkmalen.

Unter Ausnehmungen im Sinne der Erfindung sind jedwede Aufnahmen zu verstehen, die zur Halterung und/oder Führung der Behälter an dem bzw. gegenüber dem Transferstern geeignet sind. Ausnehmungen können insbesondere auch Bestandteil von Halte- und Fixierelementen sein, die umfangsseitig am Transferstern angeordnet sind und zur Fixierung der jeweiligen Behälter am Transferstern dienen. Die Halte- und Fixierelemente können insbesondere eine rastende Aufnahme für die Behälter bilden und/oder greiferartig ausgebildet sein. Damit kann beispielsweise auf eine Außenführung verzichtet werden, die ein radiales Ausweichen der Behälter nach außen hin unterbindet.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Die Erfindung wird im Folgenden anhand der Figuren an Ausführungsbeispielen näher erläutert. Es zeigen:
- Fig. 1: beispielhaft eine erfindungsgemäße Behälterbehandlungsmaschine in einer schematischen Draufsichtdarstellung;
- Fig. 2: beispielhaft die erfindungsgemäße Behälterbehandlungsmaschine gemäß Figur 1 in einer Schnittdarstellung entlang der Schnittlinie A-A;
- Fig. 3: beispielhaft eine erfindungsgemäße Behälterbehandlungsmaschine in einem zweiten Ausführungsbeispiel in einer schematischen Draufsichtdarstellung;
- Fig. 4: beispielhaft die erfindungsgemäße Behälterbehandlungsmaschine gemäß Figur 3 in einer Schnittdarstellung entlang der Schnittlinie A-A;
- Fig. 5: beispielhaft eine erfindungsgemäße Behälterbehandlungsmaschine in einem dritten Ausführungsbeispiel in einer schematischen Draufsichtdarstellung;
- Fig. 6: beispielhaft eine erfindungsgemäße Behälterbehandlungsmaschine in einem vierten Ausführungsbeispiel in einer schematischen Draufsichtdarstellung; und
- Fig. 7: beispielhaft eine überlappende Anordnung zweier Transfersterne in einer schematischen Seitendarstellung.

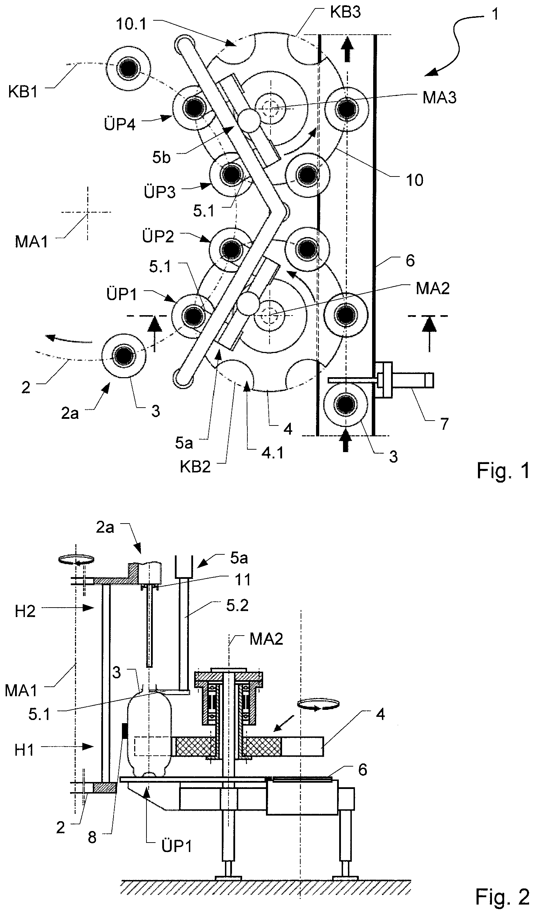

In den Figuren 1 und 2 ist eine erfindungsgemäße Behälterbehandlungsmaschine 1 in einem ersten Ausführungsbeispiel gezeigt. Die Behälterbehandlungsmaschine 1 weist ein um eine vertikale, erste Maschinenachse MA1 umlaufendes Transportelement 2 auf. An dem Transportelement 2 sind eine Vielzahl von Behandlungsstationen 2a umfangsseitig verteilt angeordnet, an denen die Behandlung der der Behälterbehandlungsmaschine 1 zugeführten Behälter 3 erfolgt. Die Behälterbehandlungsmaschine 1 ist im gezeigten Ausführungsbeispiel eine Füllmaschine mit an den Behandlungsstationen 2a vorgesehenen Füllelementen, so dass die Behälterbehandlung im gezeigten Ausführungsbeispiel eine Füllung dieser Behälter 3 mit einem Füllgut ist. Alternativ kann die Behälterbehandlungsmaschine 1 auch eine Reinigungs- und/oder Desinfektionsmaschine oder eine Inspektionsmaschine sein.

Zur Zuführung von zu behandelnden Behältern 3 ist ein erster Transferstern 4 vorgesehen, der durch ein Zusammenwirken mit einem Transporteur 6 ein Zuführen der Behälter 3 an die Behandlungsstationen 2a bewirkt. Zur Abführung von bereits behandelten Behältern 3 ist ein zweiter Transferstern 10 vorgesehen, mittels dem die bereits behandelten Behälter 3 vom Transportelement 2 in Richtung des Transporteurs 6 abgeführt werden. Der Transporteur 6 wird im gezeigten Ausführungsbeispiel durch einen Linearförderer, insbesondere ein Transportband oder eine Transportkette gebildet, der zumindest teilweise unterhalb den ersten und zweiten Transfersternen 4, 10, d.h. unterhalb des Bewegungsraums, mit dem die Behälter 3 durch diese Transfersterne 4, 10 gefördert werden, hindurchgeführt ist. Alternativ kann der Transporteur 6 auch durch eine Transportschnecke gebildet werden. Im dargestellten Ausführungsbeispiel ist lediglich ein einziger Transporteur 6 vorgesehen, der die Zuführung bzw. Abführung der Behälter 3 bewirkt. Alternativ kann auch jeweils ein separater Transporteur für die Zuführung und Abführung der Behälter 3 vorgesehen sein.

Gemäß Figur 1 werden die Behälter 3 durch den Transporteur 6 aufrecht stehend, d.h. in einer vertikalen Ausrichtung der Behälterhochachse einem Stopperelement 7 zugeführt, das eine zeitlich getaktete Freigabe bzw. Weiterleitung der Behälter 3 an den ersten Transferstern 4 bewirkt. Zur Mitführung der Behälter 3 durch den Transferstern 4 sind an diesem umfangsseitig angeordnete Behälteraufnahmen 4.1 vorgesehen. Die Behälteraufnahmen können dabei insbesondere umfangsseitig am ersten Transferstern 4 vorgesehene Ausnehmungen sein, in welche die Behälter 3 zumindest teilweise umfangsseitig aufgenommen werden können, so dass ein die Mitführung bewirkendes, teilweises Umgreifen des Behälters 3 durch den Transferstern 4 erfolgt. Durch das Stopperelement 7 wird die Weiterleitung eines angestauten Behälters 3 zeitlich getaktet derart freigegeben, dass dieser durch den Transporteur 6 in eine Behälteraufnahme 4.1 des ersten Transfersterns 4 eingefördert wird.

Der erste Transferstern 4 ist um eine vertikale, zweite Maschinenachse MA2 umlaufend angetrieben, die parallel und beabstandet zur ersten Maschinenachse MA1 verläuft. Bei einer Drehung des Transfersterns 4 um diese zweite Maschinenachse MA2 wird der in die Ausnehmung 4.1 durch den Transporteur 6 geförderte Behälter 3 in einer Kreisbewegung um einen Winkelbetrag mitgeführt. Die Behälteraufnahmen 4.1 des ersten Transfersterns 4 werden dabei insbesondere derart mit Behältern 3 bestückt, dass jeweils zumindest zwei umfangsseitig aufeinanderfolgende Behälteraufnahmen 4.1 mit Behältern 3 befüllt sind. Diese ein Behälterpaar bildenden Behälter 3 werden anschließend Übergabepositionen ÜP1, ÜP2 zugeführt. Um ein radiales Ausweichen der durch den ersten Transferstern 4 bewegten Behälter 3 zu verhindern, ist eine Außenführung 8 vorgesehen, die zumindest in einer Teilkreisbahn um den ersten Transferstern 4 herum radial zu diesem beabstandet verläuft. Der erste Transferstern 4 kann insbesondere durch einen dafür geeigneten Antrieb, insbesondere einen Servomotor getaktet angetrieben sein, so dass die in den Behälteraufnahmen 4.1 befindlichen Behälter 3 intermittierend bzw. zeitlich getaktet den Übergabepositionen ÜP1, ÜP2 zugeführt werden. Die Übergabepositionen ÜP1, ÜP2 befinden sich vorzugsweise an Schnittpunkten der Kreisbahnen KB1, KB2, auf denen die Behälter 3 durch das Transportelement 2 und den ersten Transferstern 4 gefördert werden. Der an einer Übergabeposition ÜP1, ÜP2 befindliche Behälter 3 befindet sich vorzugsweise mit seiner Behälterhochachse in einem dieser Schnittpunkte, d.h. die Behälterhochachse liegt an einem Schnittpunkt der Kreisbahnen KB1, KB2.

Die Förderung der zu behandelnden Behälter 3 an die Übergabepositionen ÜP1, ÜP2 erfolgt insbesondere derart, dass jeweils immer zwei Behälter 3, d.h. ein Behälterpaar gleichzeitig an die Übergabepositionen ÜP1, ÜP2 gefördert werden, und zwar insbesondere derart, dass ein erster Behälter 3 des Behälterpaares der Übergabeposition ÜP1 und ein zweiter Behälter 3 des Behälterpaares der Übergabepositionen ÜP2 zugeführt wird. Diese Zuführung erfolgt durch eine getaktete Drehung des ersten Transfersterns 4.

Zeitlich synchronisiert zur Förderung eines Behälterpaares an die Übergabepositionen ÜP1, ÜP2 befindet sich ein Paar von Behandlungsstationen 2a an diesen Übergabepositionen ÜP1, ÜP2. Diese Behandlungsstationen 2a sind vorzugsweise mittig auf die Schnittpunkte der Kreisbahnen KB1, KB2 ausgerichtet. Vorzugsweise befinden sich die Behandlungsstationen 2a oberhalb der Übergabepositionen ÜP1, ÜP2, an die die Behälter 3 durch den ersten Transferstern 4 gefördert werden. An den Übergabepositionen ÜP1, ÜP2 sind eine oder mehrere erste Hubeinrichtungen 5a vorgesehen. Vorzugsweise ist für beide Übergabepositionen ÜP1, ÜP2 eine gemeinsame erste Hubeinrichtung 5a vorgesehen, so dass durch diese gemeinsame erste Hubeinrichtung 5a die an den Übergabepositionen ÜP1, ÜP2 befindlichen Behälter 3 gleichzeitig angehoben werden können. Die zumindest eine erste Hubeinrichtung 5a ist in einer vertikalen Richtung parallel und beanstandet zur ersten Maschinenachse MA1 verschiebbar ausgebildet. Bevorzugt ist die erste Hubeinrichtung 5a ortsfest an der Behälterbehandlungsmaschine 1 vorgesehen.

Ferner weist die erste Hubeinrichtung 5a vorzugsweise Haltemittel 5.1 auf, die zum zumindest teilweisen Umgreifen des zu behandelnden Behälters 3 ausgebildet sind. Die Haltemittel 5.1 werden im gezeigten Ausführungsbeispiel durch einen Neckringhalter gebildet, der zum zumindest teilweisen Umgreifen des Behälterhalses unterhalb des dort vorgesehenen Neckrings ausgebildet ist. Alternativ können auch Haltemittel 5.1 in Form von zumindest einem Greifer vorgesehen sein, der zumindest zwei relativ zueinander bewegliche Greiferelemente aufweist, um den zu behandelnden Behälter 3 zumindest teilweise zangenartig zu umgreifen. Bei Vorsehen einer gemeinsamen ersten Hubeinrichtung 5a für zwei Behälter 3 weist die erste Hubeinrichtung 5a vorzugsweise ein Paar von Haltemitteln 5.1 auf, die beispielsweise an einer gemeinsamen Hubstange oder einem gemeinsamen Hubzylinder 5.2 angeordnet sind.

Mittels der ersten Hubeinrichtung 5a bzw. den daran vorgesehenen Haltemitteln 5.1 wird ein Anheben zweier Behälter 3 von einer ersten Höhenebene H1, in der die Behälter 3 durch den ersten Transferstern 4 gefördert werden, in eine zweite Höhenebene H2 bewirkt. Dabei werden diese Behälter 3 von den Übergabepositionen ÜP1, ÜP2 an die Behandlungspositionen überführt und damit jeweils ein Behälter 3 an einer Behandlungsstation 2a angeordnet. Im gezeigten Ausführungsbeispiel werden durch das Anheben die Behälter 3 aus den Behälteraufnahmen 4.1 des ersten Transfersterns 4 gezogen. Für den Fall, dass die Behandlungsstationen 2a Füllelemente aufweisen, wird beispielsweise ein dem Füllelement zugeordnetes Füllrohr über die Behältermündung in den Behälterinnenraum eingeführt.

Nach dem Anheben der Behälter 3 in die zweite Höhenebene H2 wird der jeweilige Behälter 3 an der Behandlungsstation 2a verriegelt und damit durch die Behandlungsstation 2a selbst gehalten. Hierzu kann an der Behandlungsstation 2a jeweils eine Verrieglungseinrichtung 11 vorgesehen sein, mittels der der Behälter 3 an der Behandlungsstation 2a gehalten wird. Die Verrieglungseinrichtung 11 kann insbesondere derart ansteuerbar sein, dass nach dem Anheben des Behälters 3 in die zweite Höhenebene H2, d.h. das Behandlungsniveau, der Behälter 3 in seinem Mündungsbereich durch ein oder mehrere Riegelelemente umgriffen und damit gegenüber der Behandlungsstation 2a fixiert wird. Anschließend kann die erste Hubeinrichtung 5a abgesenkt werden, da die von ihr angehobenen Behälter 3 nunmehr ausschließlich durch die Verrieglungseinrichtungen 11 gehalten wird.

Nach dem Anheben des Behälterpaares kann das Transportelement 2 samt den aufgenommenen, zu behandelnden Behältern 3 um die erste Maschinenachse MA1 getaktet gedreht werden. Dabei kann unmittelbar nach dem Anpressen der Behälter 3 der Füllvorgang beginnen.

In Drehrichtung des Transportelements 2 nach dem ersten Transferstern 4 ist ein zweiter Transferstern 10 vorgesehen, der die Abführung der bereits behandelten Behälter 3 vom Transportelement 2 zum Transporteur 6 bewirkt. Der zweite Transferstern 10 ist um eine vertikale, dritte Maschinenachse MA3 umlaufend angetrieben, die parallel und beabstandet zur ersten bzw. zweiten Maschinenachse MA1, MA2 verläuft. Der zweite Transferstern 10 ist im Wesentlichen identisch mit dem ersten Transferstern 4 ausgebildet. Zur Mitführung der Behälter 3 durch den zweiten Transferstern 10 sind an diesem ebenfalls umfangsseitig angeordnete Behälteraufnahmen 10.1 vorgesehen. Die Behälteraufnahmen 10.1 können dabei insbesondere umfangsseitig vorgesehene Ausnehmungen des ansonsten scheibenförmig ausgebildeten Transfersterns sein, in welche die Behälter 3 zumindest teilweise umfangsseitig aufgenommen werden können, so dass ein die Mitführung bewirkendes, teilweises Umgreifen des Behälters 3 durch den zweiten Transferstern 10 erfolgt.

Ähnlich zum ersten Transferstern 4 ist auch der zweite Transferstern 10 überlappend mit dem Transportelement 2 vorgesehen, d.h. die Kreisbahn KB1, auf der die Behälterhochachsen der Behälter 3 durch das Transportelement 3 bewegt werden, schneidet die Kreisbahn KB3, auf der die Behälterhochachsen der Behälter 3 durch den zweiten Transferstern 10 bewegt werden. Die Anordnung des ersten und zweiten Transfersterns 4, 10 relativ zueinander ist vorzugsweise insbesondere derart gewählt, dass eine erste Behandlungsstation 2a im Bereich einer Behälteraufnahme 4.1 des ersten Transfersterns 4 und eine weitere, unmittelbar auf die erste Behandlungsstation 2a folgende Behandlungsstation im Bereich einer Behälteraufnahme 10.1 des zweiten Transfersterns 10 zu liegen kommt. In anderen Worten ist die Anordnung des ersten und zweiten Transfersterns 4, 10 relativ zueinander insbesondere derart gewählt, dass in den Stillstandsphasen des getaktet angetriebenen Transportelements 2 und der Transfersterne 4, 10 keine Behandlungsstation 2a zwischen dem ersten und zweiten Transferstern 4, 10 zu liegen kommt. Damit wird der Verlustwinkel, in dem keine Behälterbehandlung erfolgen kann, wesentlich reduziert.

Nach der durch den ersten Transferstern 4 bewirkten Zuführung der Behälter 3 zu dem Transportelement 2, werden die Behälter 3 durch dieses Transportelement 2 an den jeweiligen Behandlungsstationen 2a behandelt, beispielsweise befüllt und durch die Drehung des Transportelements 2 dem zweiten Transferstern 10 zugeführt, der als Abführstern fungiert. Dem zweiten Transferstern 10 ist eine zweite Hubeinrichtung 5b zugeordnet, mittels der ein Absenken der Behälter 3 von der zweiten Höhenebene H2, auf der die Behandlung der Behälter 3 erfolgt, auf die erste Höhenebene H1, in der die Abführung der Behälter 3 durch den zweiten Transferstern 10 erfolgt, vollzogen wird. Die zweite Hubeinrichtung 5b weist ebenfalls ein Paar von Haltemitteln 5.1, beispielsweise als Neckringgreifer ausgebildete Haltemittel auf, mittels denen ein Paar von Behältern 3 gleichzeitig abgesenkt werden kann. Die Haltemittel 5.1 sind dabei beispielsweise zum zumindest teilweisen Umgreifen des Halsbereichs der jeweiligen Behälter 3 ausgebildet. Alternativ können auch Haltemittel 5.1 in Form von zumindest einem Greifer vorgesehen sein, der zumindest zwei relativ zueinander bewegliche Greiferelemente aufweist, um den zu behandelnden Behälter 3 zumindest teilweise zangenartig zu umgreifen. Die zweite Hubeinrichtung 5b weist beispielsweise eine Hubstange oder einen gemeinsamen Hubzylinder 5.2 auf, an dem die Haltemittel 5.1 vorgesehen sind und damit in vertikaler Richtung verfahrbar sind.

Die getaktete Drehung des Transportelements 2 und des zweiten Transfersterns 10 ist derart aufeinander synchronisiert, dass gleichzeitig jeweils zwei bereits behandelte Behälter 3 durch die zweite Hubeinrichtung 5b an Behälteraufnahmen 10.1 des zweiten Transfersterns 10 übergeben werden, die sich an Übergabepositionen ÜP3 ÜP4 befinden. Vorzugsweise ist der zweite Transferstern 10 derart ausgebildet und lagemäßig gegenüber dem Transportelement 2 derart positioniert, dass in gemeinsamen Stillstandsphasen des Transportelements 2 und des zweiten Transfersterns 10 jeweils zwei aufeinanderfolgende Behälteraufnahmen 10.1 des zweiten Transfersterns 10 unter zwei aufeinanderfolgenden Behandlungsstationen 2a des Transportelements 2 zu liegen kommen. In dieser Stillstandsphase können dann die zwei bereits behandelten Behälter 3 durch die Haltemittel 5.1 der zweiten Hubeinrichtung 5b erfasst, die Verriegelungsvorrichtung 11 gelöst und durch Absenken der Haltemittel 5.1 an den zweiten Transferstern 10 übergeben werden.

Anschließend können die Haltemittel 5.1 der zweiten Hubeinrichtung 5b außer Eingriff mit den Behältern 3 gebracht werden und die Behälter durch eine getaktete Drehung des zweiten Transfersterns 10 dem Transporteur 6 zugeführt werden. Durch diesen Transporteur werden die Behälter 3 einer weiteren Behandlungsstation beispielsweise einem Verschließer zugeführt. Anschließend kann das Transportelement 2 um einen Winkelbetrag derart gedreht werden, dass die Behandlungsstationen 2a, die sich gerade im Bereich des zweiten Transfersterns 10 befanden, oberhalb des ersten Transfersterns 4 zu liegen kommen, so dass an diesen wiederum zu behandelnde Behälter 3 angeordnet werden können. Das Transportelement 2 wird damit vorzugsweise um einen Winkelbetrag getaktet gedreht, der der doppelten Maschinenteilung (Doppelte des Winkelbetrags zwischen zwei aufeinanderfolgenden Behandlungsstationen 2a) entspricht.

Das Zuführen der Behälter 3 mittels dem ersten Transferstern 4 und das Abführen der Behälter durch den zweiten Transferstern 10 erfolgt in dem in Figur 1 gezeigten Ausführungsbeispiel über den Zwischenraum zwischen dem ersten und zweiten Transferstern 4, 10. Dabei sind der erste und zweite Transferstern 4, 10 gleichsinnig, im gezeigten Ausführungsbeispiel in einer Draufsicht entgegen dem Uhrzeigersinn, und das Transportelement 2 gegensinnig zu dem ersten und zweiten Transferstern 4, 10, im gezeigten Ausführungsbeispiel in einer Draufsicht im Uhrzeigersinn angetrieben.

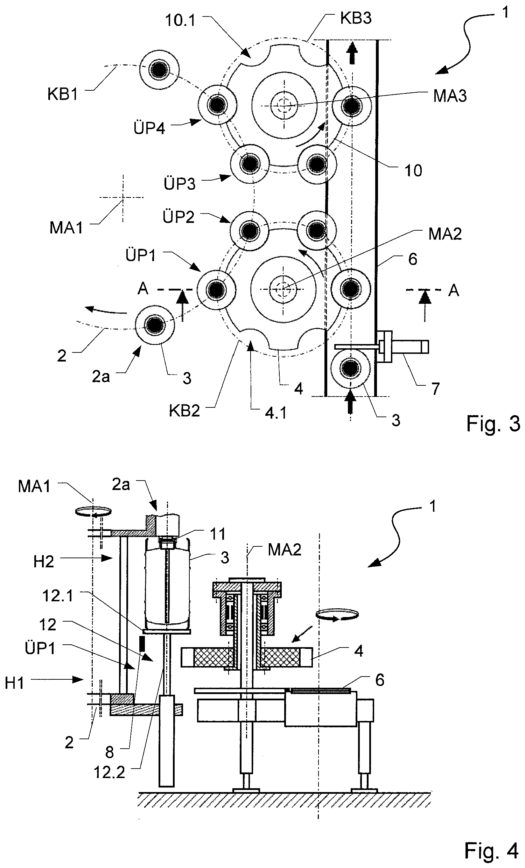

Fig. 3 und 4 zeigen ein zweites Ausführungsbeispiel einer Behälterbehandlungsmaschine 1. Der wesentliche Unterschied zwischen dem ersten Ausführungsbeispiel gemäß Figuren 1 und 2 und dem zweiten Ausführungsbeispiel gemäß den Figuren 3 und 4 besteht in einer unterschiedlichen Ausbildung der Hubeinrichtungen 5a, 5b. Anstelle der Hubeinrichtungen 5a, 5b, die den Behälter 3 im Halbereich zumindest teilweise umgreift, ist bei dem zweiten Ausführungsbeispiel eine hebebühnenartige Hubeinrichtung 12 vorgesehen, die bodenseitig an dem zu behandelnden Behälter 3 angreift. Die Hubeinrichtung 12 weist eine oder mehrere plattenförmige Elemente 12.1 auf, die eine Abstellfläche für die Behälter 3 bilden. Ferner ist zumindest ein Hubzylinder 12.2 vorgesehen, der vorzugsweise unterseitig an dem zumindest einen plattenförmigen Element 12.1 angreift und durch den ein vertikales Verfahren des plattenförmigen Elements 12.1 ermöglicht wird.

Sowohl dem ersten, als auch dem zweiten Transferstern 4, 10 ist eine Hubeinrichtung 12 zugeordnet, die im Falle des ersten Transfersterns 4 ein Anheben des Behälters 3 aus der ersten Höhenebene H1 in die zweite Höhenebene H2 und im Falle des zweiten Transfersterns 10 ein Absenken des Behälters 3 von der zweiten Höhenebene H2 in die erste Höhenebene H1 bewirkt wird. Vorzugsweise sind die die an den Transfersternen 4, 10 vorgesehenen Hubeinrichtungen 12 jeweils zum gleichzeitigen Anheben bzw. Absenken von zwei Behältern 3 ausgebildet. Im abgesenkten Zustand bildet das plattenförmige Element 12.1 vorzugsweise eine Gleitfläche, die höhengleich mit den übrigen Gleitflächen angeordnet ist, um die Behälter 3 durch Drehung des jeweiligen Transfersterns 4, 10 auf das plattenförmige Element 12.1 zu befördern oder vom plattenförmigen Element 12.1 abzufördern.

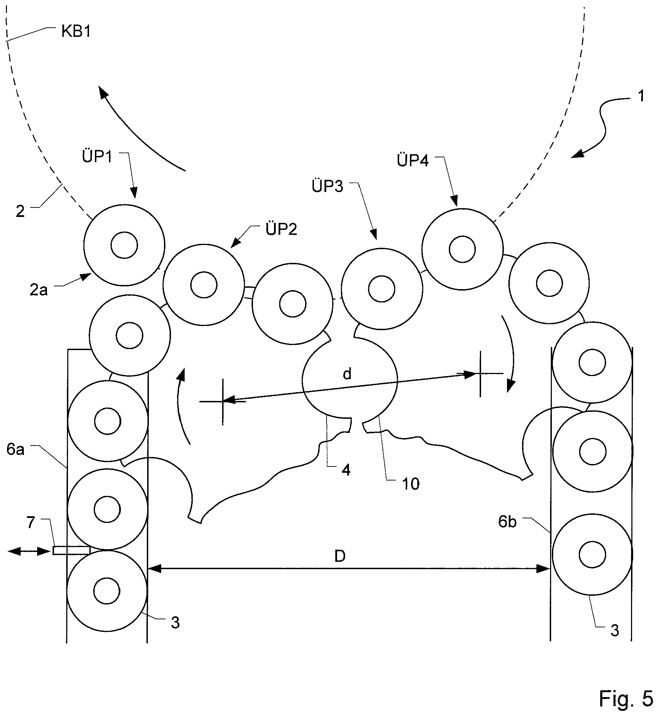

Figur 5 zeigt die erfindungsgemäße Behälterbehandlungsmaschine 1 in einer dritten Ausführungsform. Sofern nachfolgend nicht anders beschrieben, gelten die zuvor hinsichtlich der vorherigen Ausführungsbeispiele getroffenen Ausführungen.

Im Unterschied zu den vorherigen Ausführungsbeispielen sind anstelle eines unter den Transfersternen 4, 10 hindurchlaufenden Transporteurs 6 zwei Transporteure 6a, 6b vorgesehen, wobei ein erster Transporteur 6a die Zuführung der noch zu behandelnden Behälter 3 zu dem ersten Transferstern 4 und der zweite Transporteur 6a die Abführung der bereits behandelten Behälter 3 vom zweiten Transferstern 10 bewirkt. Der erste und zweite Transporteur 6a, 6b ist derart gegenüber den Transfersternen 4, 10 angeordnet, dass die Zuführung bzw. Abführung der Behälter über die einander abgewandten Umfangsseitenbereiche der Transfersterne 4, 10 erfolgt. Die Transporteure 6a, 6b verlaufen dabei parallel und beabstandet zueinander, wobei der Abstand D der Transporteure 6a, 6b größer ist als der Abstand d der zweiten und dritten Maschinenachse MA2, MA3 zueinander. Aufgrund der Vermeidung der Förderung der Behälter 3 durch den Zwischenraum zwischen den Transfersternen 4, 10 kann der Abstand d der zweiten und dritten Maschinenachse MA2, MA3 und damit der Abstand der Transfersterne 4, 10 erheblich vermindert werden, was wiederum zu einem verringerten Verlustwinkel bei der Behälterbehandlungsmaschine 1 führt.

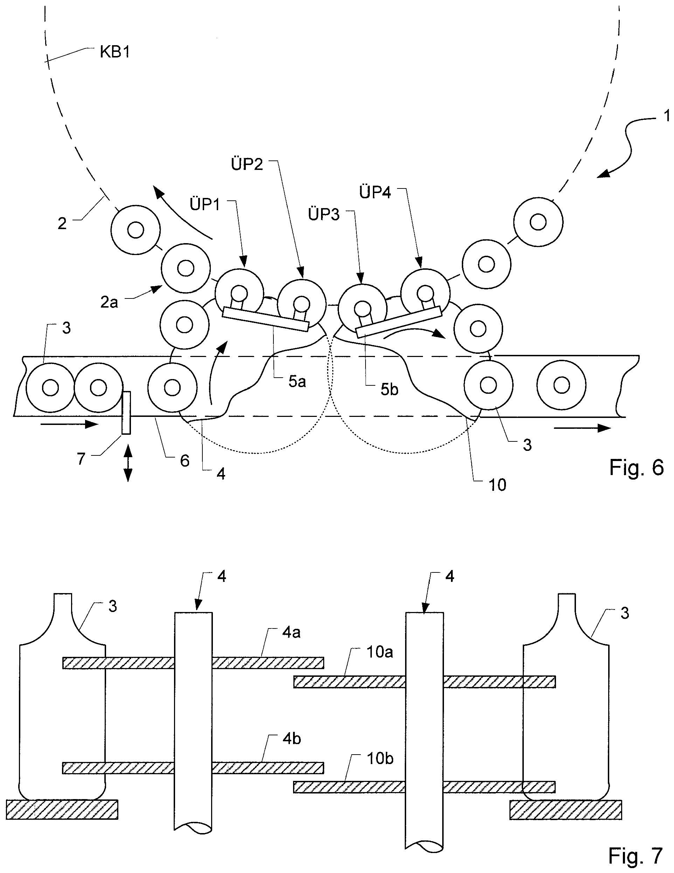

In Figur 6 ist ein weiteres Ausführungsbeispiel einer erfindungsgemäßen Behälterbehandlungsmaschine 1 gezeigt. Das Ausführungsbeispiel entspricht im Wesentlichen dem Ausführungsbeispiel gemäß Figuren 1 und 2, so dass im Folgenden lediglich auf die Unterschiede zwischen den Ausführungsbeispielen eingegangen wird. Im Übrigen trifft die Beschreibung der vorherigen Ausführungsbeispiele auch auf dieses Ausführungsbeispiel zu.

Analog zu den Ausführungsbeispielen gemäß Figuren 1 bis 4 ist in dem in Figur 6 gezeigten Ausführungsbeispiel ein durchgehender Transporteur 6 vorgesehen, mittels dem die Zuführung und Abführung der Behälter 3 bewirkt wird. Der wesentliche Unterschied zu den Ausführungsbeispielen gemäß Figuren 1 bis 4 besteht darin, dass die Zuführung bzw. Abführung der Behälter 3 über die einander abgewandten Umfangsseitenbereiche der Transfersterne 4, 10 erfolgt. Die Zuführung der Behälter 3 zum ersten Transferstern 4 erfolgt im Wesentlichen in radialer Richtung in Bezug auf den ersten Transferstern 4 auf dessen zweite Maschinenachse MA2 zu. Ebenfalls erfolgt die Abführung der Behälter 3 vom zweiten Transferstern 10 im Wesentlichen in radialer Richtung von der dritten Maschinenachse MA3 weg.

Durch die Vermeidung der Förderung der Behälter 3 durch den Zwischenraum zwischen den Transfersternen 4, 10 kann der Abstand d der zweiten und dritten Maschinenachse MA2, MA3 und damit der Abstand der Transfersterne 4, 10 reduziert und damit der Verlustwinkel der Behälterbehandlungsmaschine 1 reduziert werden. Dabei kann insbesondere auch eine Überlappung der Transfersterne 4, 10 vorgesehen sein.

Fig. 7 zeigt eine derartige Überlappung des ersten und zweiten Transfersterns 4, 10. Die Transfersterne 4, 10 weisen jeweils mehrere, im gezeigten Ausführungsbeispiel zwei Führungsebenen 4a, 4b, 10a, 10b auf. Die korrespondierenden Führungsebenen 4a, 10a bzw. 4b, 10b liegen dabei auf unterschiedlichen Höhenebenen, so dass eine kollisionsfreie Überlappung der Transfersterne 4, 10 möglich ist. Die Transportebenen, auf denen die Behälter 3 durch die Transfersterne 4, 10 bewegt werden, liegen aber vorzugsweise in einer gemeinsamen Ebene.

So wurde in den zuvor beschriebenen Ausführungsbeispielen ständig davon ausgegangen, dass zum Zuführen der zu behandelnden Behälter 3 und zum Abführen der bereits behandelten Behälter 3 zumindest ein Transporteur 6, 6a, 6b verwendet wird. Abweichend hiervon ist es ebenso möglich, den durch die Behälterbehandlungsmaschine 1 bereits behandelten Behälter nicht einem den Abtransport bewirkenden Transporteur 6 zuzuführen, sondern unmittelbar einer weiteren Behälterbehandlungsmaschine.

### Bezugszeichenliste

- 1: Behälterbehandlungsmaschine
- 2: Transportelement
- 2a: Behandlungsstation
- 3: Behälter
- 4: erster Transferstern
- 4a, 4b: Führungsebene
- 4.1: Behälteraufnahme
- 5a: erste Hubeinrichtung
- 5b: zweite Hubeinrichtung
- 5.1: Haltemittel
- 5.2: Hubzylinder
- 6: Transporteur
- 6a: erster Transporteur
- 6b: zweiter Transporteur
- 7: Stopperelement
- 8: Außenführung
- 10: zweiter Transferstern
- 10.1: Behälteraufnahme
- 10a, 10b: Führungsebene
- 11: Verriegelungsvorrichtung
- 12: Hubeinrichtung
- 12.1: plattenförmiges Element
- 12.2: Hubzylinder

- d: Abstand
- D: Abstand
- H1: erste Höhenebene
- H2: zweite Höhenebene
- KB1, KB2, KB3: Kreisbahn
- MA1: erste Maschinenachse
- MA2: zweite Maschinenachse
- MA3: dritte Maschinenachse
- ÜP1, ÜP2: Übergabeposition
- ÜP3, ÜP4: Übergabeposition

## Patentansprüche

1. Behälterbehandlungsmaschine umfassend ein um eine vertikale Maschinenachse (MA1) umlaufendes Transportelement (2) mit einer Vielzahl von Behandlungsstationen (2a) zum Behandeln von Behältern (3), einem ersten Transferstern (4) zum Zuführen der zu behandelnden Behälter (3) zum Transportelement (2) und einem zweiten Transferstern (10) zum Abführen der bereits behandelten Behälter (3) vom Transportelement (2), wobei der erste Transferstern (4) derart ausgebildet und in Bezug auf das Transportelement (2) derart angeordnet ist, dass gleichzeitig jeweils zwei zu behandelnde Behälter (3) zwei in Umfangsrichtung des Transportelements aufeinanderfolgenden Behandlungsstationen (2a) zugeführt werden und dass der zweite Transferstern (10) derart ausgebildet und in Bezug auf das Transportelement (2) derart angeordnet ist, dass gleichzeitig jeweils zwei bereits behandelte Behälter (3) von zwei in Umfangsrichtung des Transportelements (2) aufeinanderfolgenden Behandlungsstationen (2a) abgeführt werden,
**dadurch gekennzeichnet, dass** dem ersten Transferstern (4) eine erste Hubeinrichtung (5a, 12) zugeordnet ist, mittels der eine gleichzeitige Übergabe beider zu behandelnder Behälter (3) an die Behandlungsstationen (2a) des Transportelements (2) durch Anheben der zu behandelnden Behälter (3) von Übergabepositionen (ÜP1, ÜP2) in Behandlungspositionen (2a) erfolgt.

2. Behälterbehandlungsmaschine nach Anspruch 1, **dadurch gekennzeichnet, dass** der erste Transferstern (4) zur Zuführung zweier zu behandelnder Behälter (3) derart ausgebildet ist, dass durch einen einzigen Zuführschritt zwei zu behandelnde Behälter (3) gleichzeitig unter zwei aufeinanderfolgenden Behandlungsstationen (2a) positioniert werden.

3. Behälterbehandlungsmaschine nach einem der vorhergehenden Ansprüche, **dadurch gekennzeichnet, dass** der zweite Transferstern (10) zur Abführung zweier bereits behandelter Behälter (3) derart ausgebildet ist, dass jeweils eine Transfersternbehälteraufnahme (10.1) eines Paars von Transfersternbehälteraufnahmen (10.1) in vertikaler Richtung unter jeweils einer Behandlungsstation (2a) eines Paars von aufeinanderfolgenden Behandlungsstationen (2a) positioniert wird.

4. Behälterbehandlungsmaschine nach einem der vorhergehenden Ansprüche, **dadurch gekennzeichnet, dass** dem zweiten Transferstern (10) eine zweite Hubeinrichtung (5b, 12) zugeordnet ist, mittels der eine gleichzeitige Übergabe beider bereits behandelter Behälter (3) von den Behandlungsstationen (2a) des Transportelements (2) an Transfersternbehätteraufnahmen (10.1) des zweiten Transfersterns (10) durch Absenken der bereits behandelten Behälter (3) von den Behandlungspositionen in Übergabepositionen (ÜP3, ÜP4) erfolgt.

5. Behälterbehandlungsmaschine nach einem der vorhergehenden Ansprüche, **dadurch gekennzeichnet, dass** die erste und/oder zweite Hubeinrichtung (5a, 5b, 12) feststehend ausgebildet ist.

6. Behälterbehandlungsmaschine nach einem der vorhergehenden Ansprüche, **dadurch gekennzeichnet, dass** der erste und zweite Transferstern (4, 10) als Transfersternbehälteraufnahmen (4.1, 10.1) umfangsseitig angeordnete Ausnehmungen aufweist, in denen die Behälter (3) zur Zuführung und Abführung zumindest teilweise aufgenommen sind.

7. Behälterbehandlungsmaschine nach einem der vorhergehenden Ansprüche, **dadurch gekennzeichnet, dass** die Zuführung und/oder Abführung der Behälter (3) durch den ersten und zweiten Transferstern in einer ersten Höhenebene (H1) und die Behandlung der Behälter (3) an den Behandlungsstationen (2a) in einer zweiten, oberhalb der ersten Höhenebene (H1) liegenden Höhenebene (H2) erfolgt.

8. Behälterbehandlungsmaschine nach Anspruch 7, **dadurch gekennzeichnet, dass** das Anheben der zu behandelnden Behälter (3) von der ersten Höhenebene (H1) in die zweite Höhenebene (H2) durch die erste Hubeinrichtung (5a) und das Absenken der behandelten Behälter (3) von der zweiten Höhenebene (H2) in die erste Höhenebene (H1) durch die zweite Hubeinrichtung (5b) erfolgt.

9. Behälterbehandlungsmaschine nach einem der vorhergehenden Ansprüche, **dadurch gekennzeichnet, dass** die Behandlungsstationen (2a) Mittel zur Halterung der Behälter (3) in der angehobenen Position aufweisen.

10. Behälterbehandlungsmaschine nach einem der vorhergehenden Ansprüche. **dadurch gekennzeichnet, dass** das Transportelement (2) und der erste und zweite Transferstern (4, 10) unabhängig voneinander antreibbar ausgebildet sind.

11. Behälterbehandlungsmaschine nach einem der vorhergehenden Ansprüche, **dadurch gekennzeichnet, dass** das Transportelement (2) und der erste und zweite Transferstern (4, 10) zumindest teilweise wechselseitig getaktet oder intermittierend antreibbar ausgebildet sind,

12. Behälterbehandlungsmaschine nach einem der vorhergehenden Ansprüche, **dadurch gekennzeichnet, dass** die erste und zweite Hubeinrichtung (5a, 5b) als Neckringhalter ausgebildete Haltemittel (5.1) aufweist, die zum teilweisen seitlichen Umgreifen eines Behälters (3) unterhalb des Neckrings ausgebildet sind.

13. Behälterbehandlungsmaschine nach einem der vorhergehenden Ansprüche, **dadurch gekennzeichnet, dass** die erste und/oder zweite Hubeinrichtung (5a, 5b) oder daran vorgesehene Haltemittel (5.1) in radialer Richtung gegenüber der Behälterhochachse des Behälters (3) verfahrbar ausgebildet sind.

14. Behälterbehandlungsmaschine nach einem der vorhergehenden Ansprüche, **dadurch gekennzeichnet, dass** die Zuführung und Abführung der Behälter (3) zu dem ersten und zweiten Transferstern (4, 10) mittels eines einzigen, unterhalb der Transfersterne (4, 10) verlaufenden Transporteurs (6) erfolgt.

15. Behälterbehandlungsmaschine nach einem der vorhergehenden Ansprüche, **dadurch gekennzeichnet, dass** diese als Füllmaschine, als Reinigungs- und/oder Desinfektionsmaschine oder als Inspektionsmaschine ausgebildet ist.

16. Verfahren zum Zuführen und/oder Abführen von Behältern (3) zu einer Behälterbehandlungsmaschine (1) umfassend ein um eine vertikale Maschinenachse (MA1) umlaufendes Transportelement (2) mit einer Vielzahl von Behandlungsstationen (2a) zum Behandeln von Behältern (3), einem ersten Transferstern (4) zum Zuführen der zu behandelnden Behälter (3) zum Transportelement (2) und einem zweiten Transferstem (10) zum Abführen der bereits behandelten Behälter (3) vom Transportelement (2), wobei gleichzeitig jeweils zwei zu behandelnde Behälter (3) zwei in Umfangsrichtung des Transportelements (2) aufeinanderfolgenden Behandlungsstationen (2a) zugeführt werden und dass gleichzeitig jeweils zwei bereits behandelte Behälter (3) von zwei in Umfangsrichtung des Transportelements (2) aufeinanderfolgenden Behandlungsstationen (2a) abgeführt werden, wobei die Übergabe der beiden zu behandelnden Behälter (3) an die Behandlungsstationen (2a) des Transportelements (2) gleichzeitig durch eine, dem ersten Transferstern (4) zugeordnete erste Hubeinrichtung, mittels Anheben der zu behandelnden Behälter (3) von der Übergabeposition (ÜP1, ÜP2) in Behandlungspositionen (2a) erfolgt.

## Claims

1. Container treatment machine comprising a transport element (2) which rotates about a vertical machine axis (MA1), comprising a plurality of treatment stations (2a) for treating containers (3), a first transfer star (4) for supplying the containers (3) to be treated to the transport element (2) and a second transfer star (10) for discharging the already treated containers (3) from the transport element (2), wherein the first transfer star (4) is designed and arranged relative to the transport element (2) such that two containers to be treated (3) are supplied simultaneously to two respective treatment stations (2a) which follow each other in the circumferential direction of the transport element, and wherein the second transfer star (10) is designed and arranged relative to the transport element (2) such that two already treated containers (3) are simultaneously discharged from two respective treatment stations (2a) which follow one another in the circumferential direction of the transport element (2)
**characterised in that** the first transfer star (4) is associated with a first lifting device (5a, 12) whereby both containers (3) to be treated are simultaneously transferred to the treatment stations (2a) of the transport element (2) by the containers to be treated (3) being lifted from transfer positions (ÜP1, ÜP2) into treatment positions (2a).

2. The container treatment machine of claim 1 **characterised in that** the first transfer star (4) for supplying two containers (3) to be treated is designed such that two containers (3) to be treated are simultaneously positioned beneath two successive treatment stations (2a) at a time in a single supply step.

3. The container treatment machine of any one of the preceding claims **characterised in that** the second transfer star (10) for discharging two already treated containers (3) is designed such that one transfer star container receptacle (10.1) of a pair of transfer star container receptacles (10.1) is positioned vertically beneath one treatment station (2a) of a pair of successive treatment stations (2a).

4. The container treatment machine of any one of the preceding claims **characterised in that** the second transfer star (10) is associated with a second lifting device (5b, 12) by way of which a simultaneous transfer of both already treated containers (3) from the treatment stations (2a) of the transport element (2) to transfer star container receptacles (10.1) of the second transfer star (10) is brought about by lowering the already treated containers (3) from the treatment positions down into transfer positions (ÜP3, ÜP4).

5. The container treatment machine of any one of the preceding claims **characterised in that** the first and/or second lifting device (5a, 5b, 12) is configured to be stationary.

6. The container treatment machine of any one of the preceding claims **characterised in that** the first and second transfer stars (4, 10) comprise recesses arranged about the periphery as transfer star container receptacles (4.1,10.1) in which the containers (3) are at least partly received for supplying and discharging.

7. The container treatment machine of any one of the preceding claims **characterised in that** the supplying and/or discharging of the containers (3) by the first and second transfer star is effected on a first height level (H1) and the treatment of the containers (3) at the treatment stations (2a) takes place on a second height level (H2) lying above the first height level (H1).

8. The container treatment machine of claim 7 **characterised in that** the containers (3) to be treated are raised from the first height level (H1) to the second height level (H2) by the first lifting device (5a), and the treated containers (3) are lowered from the second height level (H2) to the first height level (H1) by the second lifting device (5b).

9. The container treatment machine of any one of the preceding claims **characterised in that** the treatment stations (2a) comprise means for holding the containers (3) in the raised position.

10. The container treatment machine of any one of the preceding claims **characterised in that** the transport element (2) and the first and second transfer star (4, 10) are designed so as to be drivable independently of one another.

11. The container treatment machine of any one of the preceding claims **characterised in that** the transport element (2) and the first and second transfer star (4, 10) are designed so they can at least in part be alternately indexed or intermittently driven.

12. The container treatment machine of any one of the preceding claims **characterised in that** the first and second lifting device (5a, 5b) comprise holding means (5.1) configured as neck ring holders designed for the partial lateral encompassing of a container (3) beneath its neck ring.

13. The container treatment machine of any one of the preceding claims **characterised in that** the first and/or second lifting device (5a, 5b) or holding means (5.1) provided on it are configured so as to be able to travel radially relative to the vertical container axis of the container (3).

14. The container treatment machine of any one of the preceding claims **characterised in that** the supplying and discharging of the containers (3) to the first and second transfer star (4, 10) is effected by way of a single transporter (6) running beneath the transfer stars (4, 10).

15. The container treatment machine of any one of the preceding claims, characterised as being configured as a filling machine, as a cleaning and/or disinfection machine or as an inspection machine.

16. A method for the supplying and/or discharging of containers (3) to/from a container treatment machine (1) comprising a transport element (2) which rotates about a vertical machine axis (MA1) and which has a plurality of treatment stations (2a) for treating containers (3), a first transfer star (4) for supplying the containers (3) to be treated to the transport element (2) and a second transfer star (10) for discharging the already treated containers (3) from the transport element (2), **characterised in that** two containers to be treated (3) are simultaneously supplied to two treatment stations (2a) which follow one another in the circumferential direction of the transport element (2) and two already treated containers (3) are simultaneously discharged from two treatment stations (2a) which follow one another in the circumferential direction of the transport element (2), with the transfer of the two containers (3) to be treated to the treatment stations (2a) of the transport element (2) being simultaneously performed by a first lifting device associated with the first transfer star (4) by way of lifting the containers (3) to be treated from the transfer position (ÜP1, ÜP2) into treatment positions (2a).

## Revendications

1. Machine de traitement de récipient comprenant un élément de transport (2) tournant autour d'un axe de machine vertical (MA1) avec une pluralité de postes de traitement (2a) pour le traitement de récipients (3), une première étoile de transfert (4) pour l'alimentation des récipients à traiter (3) vers l'élément de transport (2) et une seconde étoile de transfert (10) pour l'évacuation des récipients (3) déjà traités de l'élément de transport (2), dans laquelle la première étoile de transfert (4) est réalisée et est agencée par rapport à l'élément de transport (2) de telle manière que simultanément respectivement deux récipients (3) à traiter soient transférés à deux postes de traitement (2a) successifs dans le sens périphérique de l'élément de transport et que la seconde étoile de transfert (10) soit réalisée et soit agencée par rapport à l'élément de transport (2) de telle manière que simultanément respectivement deux récipients (3) déjà traités soient évacués de deux postes de traitement (2a) successifs dans le sens périphérique de l'élément de transport (2),
**caractérisée en ce qu'**un premier dispositif de levage (5a, 12) est associé à la première étoile de transfert (4) à l'aide duquel une remise simultanée de deux récipients (3) à traiter aux postes de traitement (2a) de l'élément de transport (2) est effectuée par levage des récipients (3) à traiter des positions de remise (ÜP1, ÜP2) dans des positions de traitement (2a).

2. Machine de traitement de récipient selon la revendication 1, **caractérisée en ce que** la première étoile de transfert (4) est réalisée pour l'alimentation de deux récipients (3) à traiter de telle manière que par une étape d'alimentation unique, deux récipients (3) à traiter soient positionnés simultanément sous deux postes de traitement (2a) successifs.

3. Machine de traitement de récipient selon l'une des revendications précédentes, **caractérisée en ce que** la seconde étoile de transfert (10) est réalisée pour l'évacuation de deux récipients (3) déjà traités de telle manière que respectivement un logement de récipient d'étoile de transfert (10.1) d'une paire de logements de récipient d'étoile de transfert (10.1) soit positionné dans le sens vertical sous respectivement un poste de traitement (2a) d'une paire de postes de traitement (2a) successifs.

4. Machine de traitement de récipient selon l'une des revendications précédentes, **caractérisée en ce qu'**à la seconde étoile de transfert (10) est associé un second dispositif de levage (5b, 12) à l'aide duquel une remise simultanée de deux récipients (3) déjà traités des postes de traitement (2a) de l'élément de transport (2) aux logements de récipient d'étoile de transport (10.1) de la seconde étoile de transfert (10) est effectuée par abaissement des récipients (3) déjà traités des positions de traitement dans des positions de remise (ÜP3, ÜP4).

5. Machine de traitement de récipient selon l'une des revendications précédentes, **caractérisée en ce que** le premier et/ou second dispositif de levage (5a, 5b, 12) est réalisé fixement.

6. Machine de traitement de récipient selon l'une des revendications précédentes, **caractérisée en ce que** la première et seconde étoile de transfert (4, 10) présentent des évidements agencés côté périphérie comme logements de récipient d'étoile de transfert (4.1, 10.1), dans lesquels les récipients (3) sont logés au moins partiellement pour l'alimentation et l'évacuation.

7. Machine de traitement de récipient selon l'une des revendications précédentes, **caractérisée en ce que** l'alimentation et/ou l'évacuation des récipients (3) est effectuée par la première et seconde étoile de transfert dans un premier plan vertical (H1) et le traitement des récipients (3) est effectué sur les postes de traitement (2a) dans un second plan vertical (H2) se trouvant au-dessus du premier plan vertical (H1).

8. Machine de traitement de récipient selon la revendication 7, **caractérisée en ce que** le levage des récipients à traiter (3) du premier plan vertical (H1) au second plan vertical (H2) est effectué par le premier dispositif de levage (5a) et l'abaissement des récipients (3) traités du second plan vertical (H2) au premier plan vertical (H1) par le second dispositif de levage (5b).

9. Machine de traitement de récipient selon l'une des revendications précédentes, **caractérisée en ce que** les postes de traitement (2a) présentent des moyens pour le support des récipients (3) dans la position relevée.

10. Machine de traitement de récipient selon l'une des revendications précédentes, **caractérisée en ce que** l'élément de transport (2) et la première et seconde étoile de transfert (4, 10) sont réalisées entraînables indépendamment les uns des autres.

11. Machine de traitement de récipient selon l'une des revendications précédentes, **caractérisée en ce que** l'élément de transport (2) et la première et seconde étoile de transfert (4, 10) sont réalisés entraînables au moins partiellement mutuellement en cadence ou par intermittence.

12. Machine de traitement de récipient selon l'une des revendications précédentes, **caractérisée en ce que** le premier et second dispositif de levage (5a, 5b) présentent des moyens de retenue (5.1) réalisés comme des supports d'anneau de goulot qui sont réalisés pour entourer latéralement partiellement un récipient (3) sous l'anneau de goulot.

13. Machine de traitement de récipient selon l'une des revendications précédentes, **caractérisée en ce que** le premier et/ou second dispositif de levage (5a, 5b) ou des moyens de retenue (5.1) prévus dessus sont réalisés déplaçables dans le sens radial face à l'axe vertical de récipient du récipient (3).

14. Machine de traitement de récipient selon l'une des revendications précédentes, **caractérisée en ce que** l'alimentation et l'évacuation des récipients (3) vers la première et seconde étoile de transfert (4, 10) sont effectuées à l'aide d'un transporteur (6) unique s'étendant en dessous des étoiles de transfert (4, 10).

15. Machine de traitement de récipient selon l'une des revendications précédentes, **caractérisée en ce que** celle-ci est réalisée comme une machine de remplissage, comme une machine de nettoyage et/ou de désinfection ou comme une machine d'inspection.

16. Procédé d'alimentation et/ou d'évacuation de récipients (3) vers une machine de traitement de récipients (1) comprenant un élément de transport (2) tournant autour d'un axe de machine vertical (MA1) avec une pluralité de postes de traitement (2a) pour le traitement de récipients (3), une première étoile de transfert (4) pour l'alimentation des récipients (3) à traiter vers l'élément de transport (2) et une seconde étoile de transfert (10) pour l'évacuation des récipients (3) déjà traités de l'élément de transport (2), dans lequel simultanément respectivement deux récipients (3) à traiter sont amenés à deux postes de traitement (2a) successifs dans le sens périphérique de l'élément de transport (2) et en ce que simultanément respectivement deux récipients (3) déjà traités sont évacués de deux postes de traitement (2a) successifs dans le sens périphérique de l'élément de transport (2), dans lequel la remise des deux récipients (3) à traiter aux postes de traitement (2a) de l'élément de transport (2) est effectuée simultanément par un premier dispositif de levage associé à la première étoile de transfert (4), à l'aide du levage des récipients (3) à traiter de la position de remise (ÜP1, ÜP2) dans des positions de traitement (2a).
